# EUROPEAN PATENT SPECIFICATION

(11) **EP 1 075 748 B1**
(45) Date of publication and mention of the grant of the patent: **25.05.2005**
(21) Application number: 99915716.7
(22) Date of filing: 29.03.1999
(51) Int. Cl.: H04L 12/22, H04L 29/06

(54) **METHOD, ARRANGEMENT AND APPARATUS FOR AUTHENTICATION**
VERFAHREN, EINRICHTUNG UND GERÄT ZUR AUTHENTIFIZIERUNG
PROCEDE, AGENCEMENT ET DISPOSITIF D'AUTHENTIFICATION

(30) Priority: 29.04.1998 FI 980952
(43) Date of publication of application: 14.02.2001
(73) Proprietor: Telefonaktiebolaget LM Ericsson (publ), 164 83 Stockholm (SE)
(72) Inventor: MELEN, Jan-Mikael, FIN-02320 Espoo (FI)
(74) Representative: Kärkkäinen, Veli-Matti
(86) International application number: PCT/EP1999/002140
(87) International publication number: WO 1999/056434

(56) References cited:
- EP-A- 0 367 361
- EP-A- 0 738 095
- WO-A-96/13113
- US-A- 5 297 189

## Description

### FIELD OF THE INVENTION

The present invention relates to methods for authentication in telecommunication networks. The invention relates further to an arrangement for accomplishing authentication operations in telecommunication networks and to an apparatus for use in authentication.

### BACKGROUND OF THE INVENTION

There are various types of communication applications and/or proceedings and/or services which are implemented through a telecommunication network (or several networks) and which require at least some kind of authentication. The authentication may be required e.g. when a user is accessing a specific application through a telecommunications network so as to ensure the user's right for the access. In addition, when a user is already using an application through a communications network, there may arise a need for verifying the user's right to use the application and/or the user's right to make some further proceedings, such as reconfiguration or reprogramming or updating operations, during the use, or to receive an acknowledgment from the user so as to allow the application to make some further proceedings, such as to retrieve or transfer information from the application or an associated database/record or to configure the application or information contained in an application database.

Examples of applications which might require an authentication include various commercial and noncommercial services and/or databases or records obtained through packet switched communications networks, such as Internet, Intranet or Local Area Networks (LAN). The examples include also applications such as payment services and banking services accessed through packet switched communications networks. The examples of the applications include also proceedings such as resource access, remote programming or reprogramming, or reconfiguring, updating or maintenance of software and/or databases through a communications network, as well as transmitting of confidential files and records etc. proceedings accomplished through a communications network. As already referred to, even some of the free of charge services obtained through communications networks may require an authentication.

The amount of applications which require at least a some degree of authentication of the user who and/or terminal which is trying to access the application or of a user who and/or a terminal which is already using them, but needs to be authenticated or checked during the use of the application or needs to acknowledge something during the use of the application, has increased heavily during the past years. A need for a secure and reliable authentication is also expected to increase further in the future.

The present data communications systems may utilize special keys or electronic signatures (electrically implemented signings) for authentication of the use thereof. From these the keys are used in the communication authenticity proceedings together with various cryptographic techniques and/or algorithms between two communicating data processing devices or computer devices and/or servers and/or nodes etc. data communication equipment.

According to one scenario a random challenge is given to encryption functions of the two computer devices. Both of these computers have a secret, i.e. an encryption key, which is also given to the encryption/decryption functions in both of the computers. Thereafter the results of the calculations of the two encryption functions are compared, and if the result of the comparison is positive, the authenticity is considered as being in force, and if the comparison gives a negative result, then the authenticity test is considered as being failed.

In most cases the keys are public or private keys. In a public key method a user can be identified by means of a key (for instance a password). The user and the application can use the public key for encrypting of data. In a private key method the key is usually known by the user only. The user can thus be identified only in case the key is shared between the user and the application (so called shared secret). In most cases the private key can therefore be used only for decrypting of encrypted data, whereas the shared secret key can be used both for the encryption and decryption operations.

In addition, the keys can be symmetric or asymmetric relative to the time. However, the use of asymmetric keys during a connection can make the running of the authentication arrangement too heavy. Thus an asymmetric key (or keys) is usually used only when making up a connection, and a symmetric key (or symmetric keys) is then used for the connection itself.

The electronic or digital signature is a block of data that has been created by using some secret key. A public key can be used to verify that the signature was really generated by using a corresponding secret key. The algorithm used to generate the signature must be such that it is impossible to create or guess such a signature that could be verified as a valid signature without a knowledge of the actual secret key.

To give a better understanding of the background, some of the terms of the art are explained in more detail with a brief description of some of the drawbacks thereof:
- A user identity (ID). Each of the users is having a user identity (ID), which is also sometimes referred to as a username. The user usually creates the ID by himself, and it may, for instance, be formed of the initials, the first name and/or the surname of the user, his/hers nickname or similarly. Thus the user IDs do not provide any proper and reliable security against unauthorized or illegal use of them. An ID can be used by anybody instead of the actual owner thereof.
- A password. At the present the use of a password or several passwords together with the user ID is the most often used approach for the authentication. The password is given to the remote application through a user interface, e.g. through a computer terminal connected to a communications network. However, this solution does not take the vulnerability of the network into account, since the password is exposed to everyone who has an access to the network (and who is skilled enough to read the passwords from the message).
- A secret. The secret may be described as an electronic password or a signature or an encryption key which is stored and used by e.g. a user interface. Even though the secret is not revealed to the network, it may end into "wrong hands" and could be used by some other party than those who are originally intended to be the users of the secret.
- An authentication software in a user interface. This is a more sophisticated approach for the authentication. A password code is given to a program in the user interface, which then automatically authenticates in a cryptographic manner the access to the requested application. Even though this provides a more secure arrangement than the above solutions, it still leaves a possibility for catching the secret passwords from the user interface. It is also possible to modify the software without a notice to the actual user.

The above already mentions some parties which may be involved when implementing the present authentication systems. They are also briefly explained in the following:
- A user is usually a human being i.e. a real person who uses various applications or services through a telecommunications network or several networks connected to each other. The user can be identified by means of a user ID together with a key (a password or a secret) which is only known by him/her (a public key method), or by means of a key which is shared between the user and the application (a shared secret key method).
- An application is a party that wants to ensure the authenticity of the user. The application can also be called as a service. From the application's point of view the authenticity question can be divided in four different categories (questions):
   1) is the user at the moment in the other end? (so called peer-entity-authentication),
   2) are the further messages and communication received from the same user? (integrity of the message stream),
   3) does a specific message and communication originate from a certain user? (data origin authentication), and
   4) is the message and communication such that even a third party may believe it to originate from a certain user? (non-repudiation).
- A user interface is a device or an arrangement which enables the user to access the application. In most instances it can also be referred to as a terminal, and may consist of a computer (e.g. Personal Computer, PC), a workstation, a telephone terminal, a mobile station, such as a mobile telephone or a radio or a pager or a combination of a mobile telephone and a data processing device, an automatic money teller and/or banking machine, etc. The user interface provides input/output facilities
- A key server is a server which contains all keys and signatures of different users of a communications network. In the present systems the key server is located in the global and open connectionless Internet network, and is thus accessible by all those users who are having access to the Internet. The present key servers are arranged to respond to key queries sent by the users of the Internet. Usually the procedure is such that the user of the Internet gives the name (or ID) of the other party, and thereafter the key server retrieves a key from a database thereof and sends this key as a response to the user. The information contained by an individual key server can be updated either by anybody who is capable of using the Internet or only by the owner of the server, in case the access to the key server is limited to this.

The publication US 5,297,189 shows, as referred as a prior art, one solution relating to wireless telephone service subscription data user access method utilized in one telecommunication network. The presented solution is a solution between two closed networks and may be utilized in the conventional public switched telephone network environment, i.e. between a circuit switched network and a mobile network. The presented solution is not applicable in an environment having a closed network communicating with an open network, e.g. circuit switched network communicating with Internet.

### SUMMARY OF THE INVENTION

A problem with the present systems is that the used communications system and the users thereof have to trust that the user initially gave a correct user identity (ID) to the system, e.g. to a key server. In addition, the information stored in the database of an Internet key server can be changed by a third party, and thus these open databases are not kept secure e.g. against hackers.

To improve the security, certified key servers are introduced and used instead of the conventional uncertified key servers. The certified key server will not accept the key of the user over the packet switched communications network, but the user must give the key to the administrator of the certified key server by a "hand-in-hand method". This, however, makes the use thereof more complicated and many of the users feel it uncomfortable, and thus do not want to use them.

Therefore the present key servers are utilized such that the user downloads with a ftp (file transfer protocol) a key. The system (e.g. the used application) has to trust, in addition to the correctness of the given user ID, that nobody has changed the original key either.

The electronic signatures cannot be trusted either since there is no absolute certainty of the correctness of the electronic keys allocated in a key server. The users/systems have to trust that the user gave a correct user identity. The electronic signatures are also vulnerable to hackers or similar intruders. For example, in the Internet environment these can be easily configured for every user, and anybody can change the public keys if he/she wants to do this.

Another problem of the electronic keys/signatures is that they require complex authentication programs. And still there is no absolute certainty of the correctness or origin of the keys or signatures. In case the access to the application is made as secure as possible by the prior art solutions, the application easily becomes extremely complex from the architecture thereof, and becomes also complicated and more time consuming to access and use.

In case the security level will be increased, the amount of the required hardware and software is also increased, which leads to an increased need for maintenance and updating thereof, and thus the total costs of the authentication may become essentially high. In addition, it is believed that a condition called as "absolutely secure" does not even exist in the present open communications networks, as the technical development makes it possible e.g. for the hackers to solve even the more complicated ones of the present security arrangements.

A human problem lies on the fact that the keys or signatures may become quite complicated and/or too long, or that there may be too many of them for a user to handle and remember all of them correctly. Typically a key which is considered as secure in the secret key method is 128 bits or longer and in the public/private key method a secure key is considered to be 1024 bits or longer. For the most of the people it is impossible to remember this kind of keys.

In addition to the possibility of catching the electronic key or signature or password during its transmission over an open packet switched communications network, as was discussed above, today's solutions do not sufficiently pay attention to the vulnerability of the user interfaces either. The terminal devices used to form the interfaces have developed to be full of complex technology and software such that most of the users are no longer capable of fully controlling the terminals, or even understanding the operation thereof. In addition, it often occurs that many users share the same terminal device (e.g. the terminal is a commonly used PC) and/or that some external maintenance personnel has an access to the computers of a per se closed organization.

The computer terminals contain stored state and programs in the memory means thereof, which can be modified. In the modern computers it is possible to modify the software thereof even such that the user does not notice this, and even through the communication paths without any physical access to the device itself. To give an example of the risks, it is possible to modify a program in a computer terminal such that it modifies the data the user sends e.g. to a bank, e.g. such that the computer modifies all bank transfers in a certain day to another account than what was designated by the user. This modifying or reprogramming without a notice may cause serious and huge damages when used against ordinary individual users, and especially when used against organizations such as companies or public administration. This all means that the ordinary terminal devices and communication paths cannot be trusted.

Therefore it is an object of the present invention to overcome the disadvantages of the prior art solutions and to provide a new type of solution for authentication.

An object is to provide a method and an arrangement by means of which a user interface accessing an application can be authenticated in a more secure manner than what has been possible in the prior art. A further object is to provide a more secure authentication when a need for the authentication arises during the use of an already accessed application.

An object is to provide a solution in which the application can be certain that the user identity and the authentication data, such as a key or signature, are correct.

An object of the present invention is to provide a solution in which a telephone subscription number, an identification module of a mobile station or a mobile equipment identity or identity provided by a smart card or similar means can be utilized in the authentication.

An object is to provide a solution by means of which data encryption procedures between the communicating parties can be realized in a novel and improved manner.

The objects are obtained by a method of authenticating communications in telecommunications networks, wherein the method comprises storing authentication data in an authentication server, storing a user interface identification data in the authentication server such that it is bound with the associated authentication data, transmitting an identification data of a communicating user interface to the authentication server, receiving the identification data in the authentication server, retrieving such authentication data from the stored authentication data which is bound to the received identification data, and transmitting at least a part of the retrieved authentication data from the authentication server as a response to the received identification data.

According to an alternative the method of authenticating communications in telecommunications networks comprises the storing authentication data in an authentication server, storing a user interface identification data in the authentication server such that it is bound with the associated authentication data, transmitting an authentication data for a communicating user interface to the authentication server, receiving the authentication data in the authentication server, retrieving such user interface identification data from the stored user interface identification data which is bound to the received authentication data, and transmitting at least a part of the retrieved user interface identification data from the authentication server as a response to the received authentication data.

In addition, the invention provides an arrangement for use in telecommunications networks. The arrangement comprises a user interface connected to a first telecommunications network, said user interface having an identification, an application accessible through a second telecommunications network, an access server enabling the user interface to access the second telecommunications network through the first telecommunications network, and an authentication server, wherein the authentication server comprises a record or a database in which the identification of the user interface and a corresponding authentication data are stored in a retrievable manner and such that they are bound together.

An authentication server for use in telecommunications networks is also provided. The authentication server comprises a database or record for storing a user interface identification data for a user interface terminal connected to a telecommunication network and authentication data for a plurality of user interface terminals such that the user interface identification is bound to an associated authentication data for said user interface terminal.

Several advantages are obtained by means of the present invention, since the solution provides a simple, reliable and controllable manner for authentication. The solution increases the level of security of a packet switched network to a level which substantially corresponds at least the level of security of a public switched telephone network (PSTN). The apparatus providing the authentication is under surveillance of a trusted party, such as a network operator (e.g. a public telephone network operator) or similar party who can in general be kept as a such trusted party who can sufficiently ensure the authenticity of the user interfaces connected to the networks of the operator. The owner of the server providing the application does not need to know the personality of the user, but the application provider can rely on the fact that the operator has a trusts on the user and is therefore prepared to authenticate the use. The invention provides improved possibilities for remote working, as the authentication proceedings are made more reliable while the running time load caused by the authentication procedures to the system is decreased and the authentication procedures as well as encryption key provision procedures are made more simple to accomplish and more transparent to the user, and while a good security for the connection can still be provided.

In the following the present invention and the other objects and advantages thereof will be described in an exemplifying manner with reference to the annexed drawings, in which similar reference characters throughout the various figures refer to similar features.

### BRIEF DESCRIPTION OF THE DRAWINGS

Figure 1 is a schematic presentation of one network arrangement including a server operating in accordance with the principles of the present invention;
Figure 2 is a schematic presentation of a table implemented within the server of figure 1;
Figures 3 and 4 disclose flow charts for the operation of two embodiments of the present invention; and
Figures 5 and 6 illustrate signal flows between various parties in two different signaling situations.

### DETAILED DESCRIPTION OF THE DRAWINGS

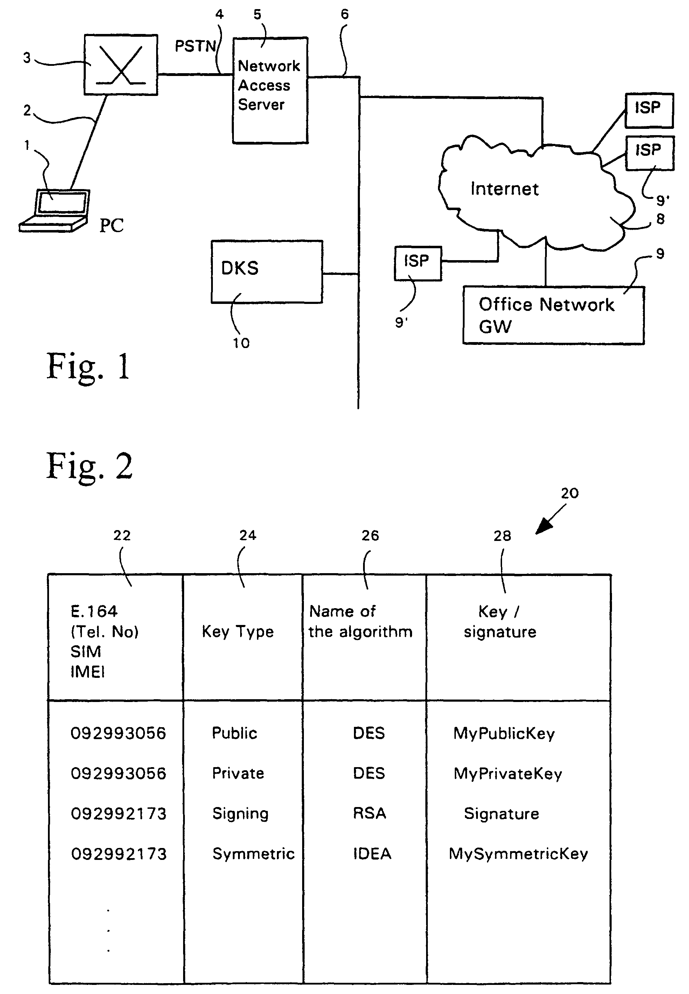

Figure 1 is a schematical presentation of an arrangement comprising a PSTN (Public Switched Telephone Network) to which a user is connected through his/hers user interface or terminal 1. A PSTN is a well known switched telephone network arrangement which is commonly used for voice and data traffic in a manner per se known by the skilled person, and thus not explained in more detail herein. It is sufficient to note that a PSTN usually contains various exchanges (local branch exchanges, private branch exchanges, central exchanges, gateway exchanges etc.) and connections (such as trunk lines) there between and connections or links to other networks and interfaces for connecting the user terminals to the PSTN.

It is noted that the invention is not intended to be limited for use in such instances in which user interfaces or terminals are connected to a PSTN and thus operating through the PSTN network, but also other types of telecommunication networks capable of providing communications between at least two parties could be used, such as various types of PLMNs (Public Land Mobile Networks). In this context it is noted that two commonly used PLMN systems are based respectively on CDMA (Code Division Multiple Access) and TDMA (Time Division Multiple Access). For example, the IS-95 standard used in the USA is based on CDMA, whilst the widely used GSM standard (Global System for Mobile Communication) is based on TDMA. The future PLMNs are expected to be based on wideband solutions of the above, such as W-CDMA or W-TDMA.

In the example of figure 1 the user terminal 1 consist of a data processing device, and more precisely of a Personal Computer (PC). A PC usually comprises a Central Processor Unit (CPU), memory (ROM, RAM), a keyboard, a display, and necessary interface means for connecting and interfacing the data processing device to the PSTN exchange apparatus, such as to a branch exchange 3 of figure 1, through an operational connection 2. These interface means may comprise e.g. a network board, appropriate connection ports and couplings, a modem, in case a modem connection is used, or the interface may be arranged by means of an ISDN connection (Integrated Services Digital Network) or by a xDSL (any Digital Subscriber Line) including an ADSL (Asymmetric Digital Subscriber Line), or by an IDSL (ISDN Subscriber Line), or by an ATM (Asynchronous Transfer Mode) connection for high speed access, or by any other corresponding solution for accessing data networks.

A Network Access Server (NAS) 5 is operationally connected by a connection 4 to the PSTN exchange 3. In some instances the Access Server may also be implemented to form a part of the network exchange apparatus. In case the network to be accessed is a global packet data network utilizing TCT/IP suite and referred to as the Internet, the Access Server (AS) is correspondingly often referred to as Internet Access Server (IAS).

The Network Access Server (NAS) is arranged to identify the telephone number to which the calling telephone subscription (i.e. the subscription used by PC 1) tries to establish a connection. In case the destination number is an Internet number, such as a number for an office network gateway 9 or a number for an Internet Service Provider (ISP) 9' beyond the Internet 8, the call will not be routed further to the Public Switched Telephone Network (PSTN) as an ordinary circuit switched call, but it is terminated to the NAS 5 and the data will then be routed via a data network to the Internet 8, usually in a form of data packets as a packet switched call. In other words, the NAS 5 is arranged to convert the circuit switched network signal coming from the terminal 1 to data packets which can then be sent over to a packet switched network and to transmit this packet data to the Internet 8. However, another types of suitable Access Nodes (ANs) than the above described NAS are also known, and may be used instead or a NAS for providing the access from the terminal 1 to the Internet 8.

In figure 1 the applications to be accessed are illustrated as an office network gateway 9 or ISPs 9'. In case the used application is the gateway 9, the user of the PC 1 can be seen as working remotely, e.g. at home, and as a user who accesses the office network gateway 9 through an Internet TCP/IP connection. However, it is to be noted that the application requiring authentication can be any other type of application accessible through a packet data network than the ones illustrated, such as a service or application provided by some other party than by the Internet Service providers (ISPs) 9'.

The arrangement comprises further an authentication node or authentication server, which in this example is named as a Domain Key Server (DKS) and is designated by 10. The authentication server is implemented in the interface or connection point between the switched network and the packed data network. Thus, as disclosed by figure 1, the authentication server 10 is located in close relation with the PSTN 4, preferably such that it is having a direct connection with the Access Point i.e. the NAS 5 between the PSTN 4 and the Internet 8.

An authentication server contains a record or a database which includes all keys and/or signatures, i.e. authentication data, which is needed in applications requiring an authentication. To provide the authentication, the applications are arranged to use an authentication service provided by the authentication server 10. The authentication server 10 is arranged to bind or combine the authentication data to an identifier of the user interface from which the communication or call originates. This identifier can be e.g. a telephone subscription number (e.g. E.164), an IMEI code (International Mobile Equipment Identity) or a SIM code (Subscriber Identity Module), smart card or similar device identification designating the origin of an incoming call. These identifiers are also stored within the authentication server, as will be explained in more detail with reference to figure 2.

An important feature of the authentication server is that it is implemented, run, managed, maintained and controlled by a trusted party, such as by a telephone network operator of the PSTN, or a governmental organization or a company providing network security services, or network services in general. Various organizations, such as companies, universities, associations etc., can also have a key server of they own. The server is preferably disposed physically within or closely adjacent to the Access Server, and such that no outsiders may having an access to it so that it can be trusted.

Figure 2 discloses one example of a table implemented within the authentication server. The table 20 is used as a record to store the necessary data / information for the authentication procedures. In the example the first column is a identification data field or a device identification field 22, which includes an identifier such as an E.164 telephone number, a SIM (Subscriber Identification Module) or an IMEI (International Mobile Equipment Identity), or a smart card identity. For reasons of clarity, the exemplifying field 22 of figure 2 shows only telephone numbers.

From the above the E.164 number is only an example of the different number addresses, E.164 being standardized by ITU-T (International Telecommunications Union). Other corresponding telephone numbers can also, naturally, be used as an user interface identification. The SIM, in turn, is usually a card or chip mounted within a mobile station, but corresponding identification modules can also be used in other terminals as well. The IMEI is an unique identification of a mobile station.

Some other identifiers, such as solutions based on end user accounts can also be used for the identification purposes. In addition, the type of the terminal can also be used for identification purposes. To give an example of the latter, the terminals could be divided e.g. into "dummy" and "intelligent" terminals in accordance with the operational principles thereof. A "dummy" terminal can be identified in accordance with the interface point (usually a fixed line connection point). An "intelligent" terminal is provided with a SIM, an IMEI, a smart card or similar, and the identification is based on this device instead of the interface point.

The second column of the table 20 forms a key type field 24. The type of the key may be, for instance, a public key, a private key, a signature, a symmetric or an asymmetric key.

The third column of the table 20 forms a field 26 for the name of the used cryptographic algorithm. The used algorithm can be, for instance, an algorithm based on a DES (Data Encryption Standard), or a RSA (Rivest, Shamir, Adleman -algorithm) or an IDEA (International Data Encryption Algorithm), or any other algorithm suitable for the cryptographic operations possibly required in the authentication procedures.

The fourth column of the table 20 forms an authentication data field 28 indicative of the used key / signature. As can be seen, the keys/signatures in the authentication data field 28 are bound to the respective identifiers in the identification data field 22 and other possible fields. It is to be noted that one user / identifier may have more than one key and/or signature which are then used in accordance of the requirements of the used applications.

According to one alternative table structure the identification data field 22 could be divided into separated fields such that the telephone number, SIM and IMEI, a smart card etc. each are included in a separate identification data field of their own. The data from the above separated fields could be utilized during the authentication procedure even such that the separated fields are compared to each other during the authentication.

In operation, an authentication server is used for storing appropriate authentication data or information and device identification data in such a manner that the respective data is combined in a predetermined manner. In the authentication server 10 the stored authentication data can be used to authenticate the calling device by means of the device identification data or identifier (e.g. by verifying the calling telephone number, or the SIM or the IMEI of the calling device to the authentication data). Alternatively the calling device identification data can be used by the authentication data (e.g. by verifying the key or the signature to the identifier) for the authentication purposes. In other words, the binding of the calling device identity, i.e. user interface identification, and the authentication data can be accomplished in both ways, and thus the authenticity test can be done either by the device identification data (authenticity of the authentication data) or by the authentication data (authenticity of the device identification).

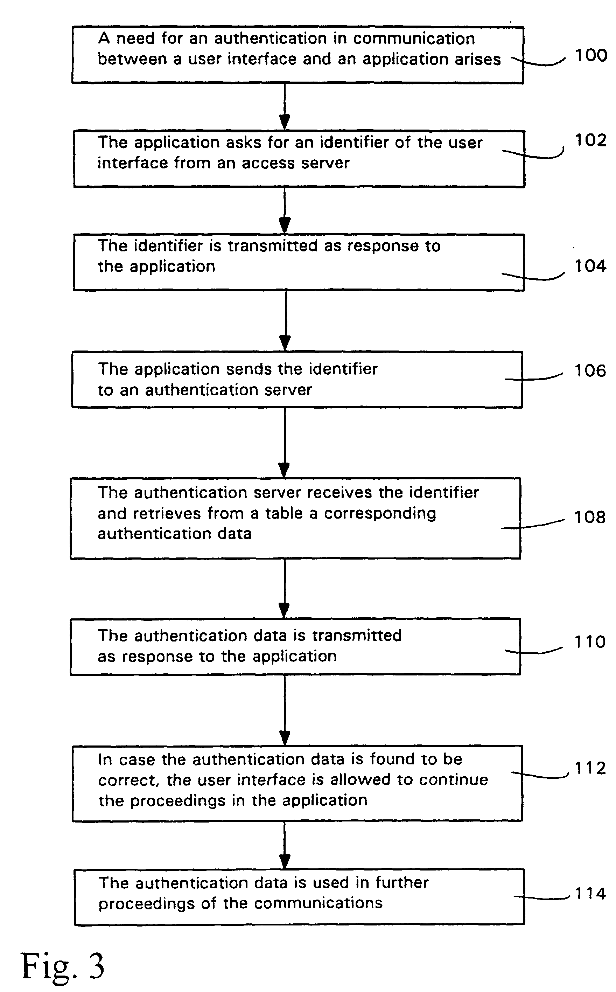

More precisely, and with reference to the flow chart of figure 3, the required keys/signatures and device identifiers are contained in and retrieved from the authentication server database or record. The arrangement may be such that the authentication server and the NAS are having keys of their own which authenticate them towards the other network apparatus.

More precisely, after a need for authentication has arisen at step 100, the application, such as 9 or 9' in figure 1, asks in step 102 for the telephone number or other identifier of the calling terminal from the NAS by using e.g. client's IP (Internet Protocol) number. The identifier can also be asked from some other trusted party having the calling terminal identifier. However, the first solution is preferred especially in such cases where dynamic IPs are used.

At step 104 the NAS sends then the requested telephone number or other identifier to the application, which transmits it further to the authentication server (DKS 10) at step 106. It is also possible to arrange this stage such that the number is sent directly from the NAS to the authentication server. The sent identifier data can preferably be encrypted with a public key of the authentication server.

In the authentication server the identifier data is then received at step 108 and bound with the authentication data. In case an associated authentication data is found and retrieved from the authentication server table at step 108, it is returned at step 110 as a response to the application 9, 9'. At this stage the authentication data can preferably be encrypted with application's public key.

After the application 9, 9' has received the authentication data, and found it to be appropriate and correct (step 112), it can be used in the application proceedings at step 114. Thus, in case the authentication data consist of a key or similar, the application 9, 9' uses this key for the possible encryption operations. In case the authentication data is an electronic signature, the application 9, 9' can e.g. compare it to the signature received from the user so as to get a confirmation that the user is the one who he/she claims to be, and proceed accordingly depending on whether the user is confirmed or not. For instance, in case the signatures received from the authentication server and from the user match to each other the proceedings are allowed to continue. In case the signatures do not match, i.e. they are different, the application 9, 9' does not allow any further proceedings to be accomplished and may even immediately disconnect the connection. An example of an application in which the signature can be used is electronic commerce (E-Commerce) in which the signature can be used as a verification of the orders so that the seller can ensure the user to be a real person and authorized to use the subscription to order the products and/or services.

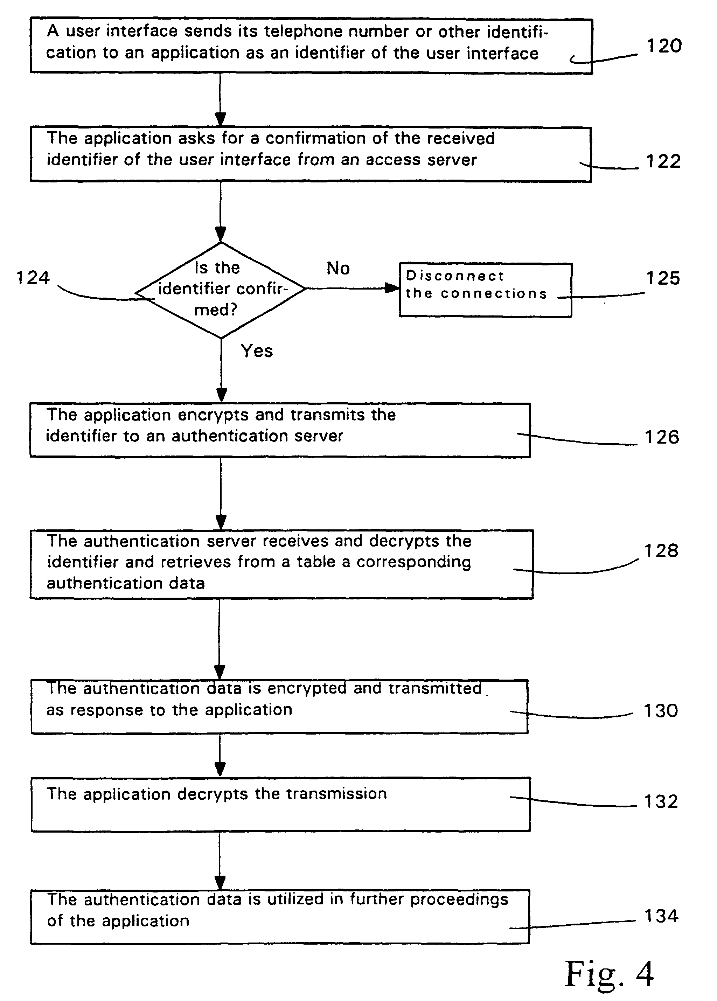

According to an embodiment illustrated by the flow chart of figure 4 a client sends at step 120 his/hers telephone number to the application, where after the application, such as the office gateway 9 of figure 1, asks at step 122 the NAS to confirm that this telephone number is the correct one. In case the NAS confirms at step 124 the telephone number (i.e. the device identification), the application 9, 9' sends this telephone number to the authentication server at step 126. In case the number is not confirmed, the connections can be disconnected, or some other procedures, such as a retry, may follow. The transmission to the authentication server 10 can be encrypted at this stage by using the public key of the application 9 or the public key of the authentication server. The encrypting can also be accomplished by using the public key of the user contained in the authentication server record.

After the authentication server has received the device identifier at step 128, the authentication server retrieves a corresponding key/signature and returns this as response to the application at step 130. As described above, this transmission can be crypt at step 132 by using the public key of the authentication server or the application server of the user. The possible encrypting/decrypting and signing operations can be accomplished, for example, in the Internet Access Point (i.e. NAS 5 in figure 1) or even in the client i.e. the user interface, or, naturally, in the application 9, 9' itself.

In case the decryption is accomplished in the Access Server 5 of figure 1, the Access Server asks for user's private key from the authentication server 10. In case the decrypting is accomplished in the PC 1, the PC asks for the private key. Thus the private key is given only to the trusted parties. The public key, in turn, may be given to anybody who asks for it. The public key can be used only for crypting, whereas the private key can be used both for encrypting and decrypting of data. The application 9, 9' gives either its public key or a symmetric one-time or unique session key.

To increase the security level, it is possible to use various tunneling techniques in the communication between the application server and the NAS and authentication servers using per se known tunneling protocols, such as L2TP (Layer 2 Tunneling Protocol) or IPSEC (IP Security Protocol). The transmitted data packets can also be encapsulated during the transmission thereof. A possibility is to use IPv6 protocol which enables encryption of headers. IPv6 protocol is a new version of the well known IP (Internet Protocol).

It is to be noted that while figures 3 and 4 disclose a situation in which the user interface identification data is transmitted to the authentication server so as to receive the corresponding authentication data, the sent information can also be an authentication data, which the application 9, 9' has received from the Access Server or from the user interface.

After sending this authentication data to the authentication server it receives a device identification, in case the authentication data was correctly announced. This received device identification has to match with the device identifier data possibly received from the Access Server or the user interface during the original communications with the user interface.

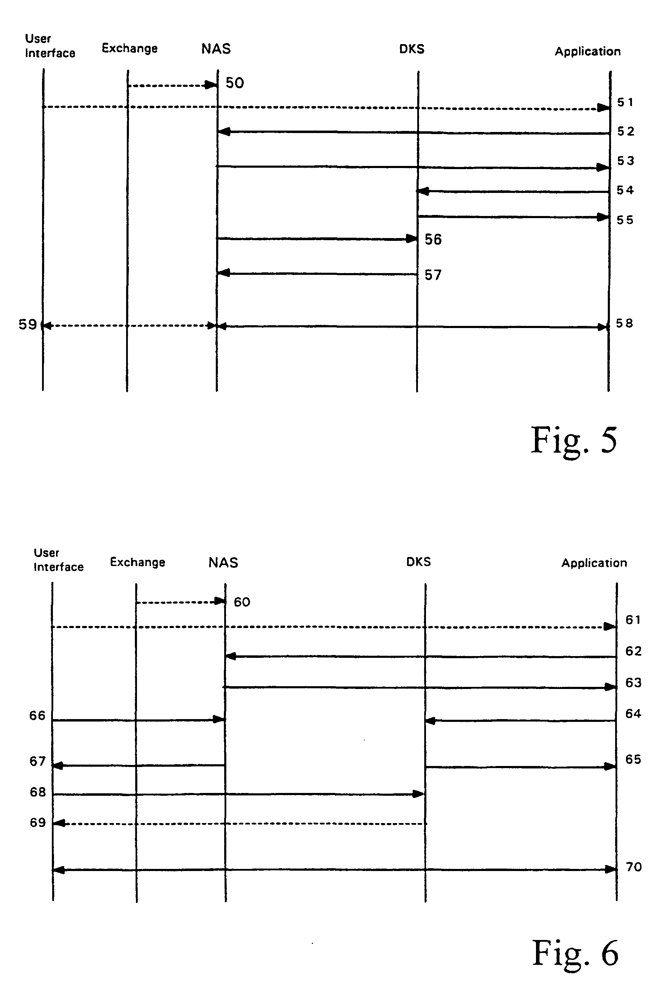

Figures 5 and 6 disclose exemplifying flow charts for possible signaling between various parties. Those messages which are not encrypted are designated by a dashed line and the encrypted messages are designated by a solid line.

In figure 5, a connection is established and a telephone number is transmitted as an identifier from a telephone exchange to the NAS by message 50. The user interface makes thereafter a connection by message 51 to the application 9, 9' for the first time. The message 51 may include the telephone number of similar device identifier. The messages 50 and 51 are not encrypted.

The application 9, 9' asks for the subscription number of the calling device or similar identifier by message 52. This connection may be encrypted e.g. by the public key of the NAS. Subsequently the NAS responds to the inquiry by message 53. This message may be encrypted e.g. by application's public key. The application 9, 9' asks then for the key of the user from the authentication server DKS by message 54. This message may be encrypted by the public key of the DKS. The DKS responds to the inquiry by message 55, which may be encrypted by using the public key of the application.

In this embodiment even the NAS asks for the key of the user from the DKS by message 56. This message can be encrypted by the public key of the DKS. The DKS responds to the inquiry by message 57, which may be encrypted by the public key of the NAS.

In case the user was authenticated successfully, a connection is established between the user interface and the application 9, 9'. As can be seen, the messages 59 between the user interface and the NAS are not encrypted and the messages 58 between the NAS and the application 9, 9' are, in turn, encrypted. The NAS is arranged to perform the required encryption and decryption operations, e.g. by retrieved keys or by a session key which has been agreed between the parties.

In figure 6, a connection is established and a telephone number or similar is transmitted as an identifier to the NAS by a message 60. Then user interface takes a connection by message 61 to the application 9, 9' for the first time. As above, the message 61 may include the telephone number of similar device identifier. The messages 60 and 61 are not encrypted.

The application 9, 9' asks for the subscription number of the calling device or similar identifier by message 62. This connection can be encrypted e.g. by the public key of the NAS. Subsequently the NAS responds to the inquiry by message 63. This message can be encrypted e.g. by application's public key. The application 9, 9' asks then for the key of the user from the authentication server DKS by message 64. This message may be encrypted by the public key of the DKS. The DKS responds to the inquiry by message 65, which may be encrypted by using the public key of the application 9, 9'.

In this embodiment the user interface asks for the user interface number from the NAS by message 66. This message can be encrypted by the public key of the NAS, in case the user interface is aware of this key. The NAS responds to the inquiry by message 67. If necessary, this may be encrypted by an one time key, in case the user interface provided a such together with the inquiry message 66.

After this the user interface asks for the user key from the DKS by message 68. This may be encrypted by the public key of the DKS, in case the user interface is aware of this. Thereafter the DKS responds to the inquiry by message 69. This message may be encrypted, in case the user interface provided an one time key in the message 68.

Finally, a connection is established between the user interface and the application 9, 9'. As can be seen, the whole messaging 70 between the user interface and the application 9, 9' is encrypted. The user interface is now capable of performing the required encryption and decryption operations, e.g. by the retrieved keys or by a session key which has been agreed between the parties.

Thus, the invention provides apparatus and methods by which a significant improvement can be achieved in the security of connections. The security in the authentication procedures is improved as the authentication server provides an improved certainty of the keyholder (the identity data) and of the correctness of the authentication data, such as an electronic key or signature. The invention enables a provision of a reliable link in which a part of the connection is accomplished e.g. in a switched network and a part in a tunneled packet network. The invention provides good possibilities e.g. for remote working, for remote education or remote maintenance of patient records, for remote updating of databases etc., as it enables the user to use an asymmetric key when establishing the connection and then sent an one time symmetric key for the connection itself in case the use of the asymmetric keys makes the running of the process otherwise too heavy to accomplish.

It should be noted that the foregoing examples of the embodiments of the invention are not intended to restrict the scope of the invention to the specific forms presented above but the present invention is meant rather to cover all modifications, similarities and alternatives which are included in the scope of the present invention, as defined by the appended claims.

## Claims

1. A method of authenticating communications in telecommunications networks, **characterized in that** the method comprises:
storing authentication data received from the first telecommunications network (4) in an authentication server (10);
storing a user interface identification data received from the first telecommunications network (4) in the authentication server (10) such that it is bound with the associated authentication data;
transmitting an identification data received from the first telecommunications network (4) of a communicating user interface to the authentication server (10), the said user interface is communicating with an application (9), (9') implemented in a packet data network (8), the user interface comprising a data processing device and being connected to a circuit switched telecommunications network having an operational connection to the packet data network (8) ;
receiving the identification data in the authentication server (10);
retrieving such authentication data from the stored authentication data which is bound to the received identification data; and
transmitting at least a part of the retrieved authentication data from the authentication server (10) as a response to the received identification data.

2. A method for authenticating communications in telecommunications networks, **characterized in that** the method comprises:
storing authentication data received from the first telecommunications network (4) in an authentication server (10);
storing a user interface identification data received from the first telecommunications network (4) in the authentication server (10) such that it is bound with the associated authentication data;
transmitting an authentication data received from the first telecommunications network (4) for a communicating user interface to the authentication server (10);
receiving the authentication data in the authentication server (10), the said user interface is communicating with an application (9), (9') implemented in a packet data network (8), the user interface comprising a data processing device and being connected to a circuit switched telecommunications network having an operational connection to the packet data network (8);
retrieving such user interface identification data from the stored user interface identification data which is bound to the received authentication data; and
transmitting at least a part of the retrieved user interface identification data from the authentication server (10) as a response to the received authentication data.

3. A method according to any of claims 1 to 2,
**characterized in that** the authentication data consists of an electronic key or signature and the user interface identification data is one of a telecommunications subscription number, a Subscriber Identification Module SIM, an International Mobile Equipment Identity IMEI, a smart card identity, or is a combination of at least two of said identifiers.

4. A method according to any of claims 1 to 3,
**characterized in that** the communications between the authentication server (10) and a network apparatus requesting authentication is encrypted using public keys or private keys of an application (9), (9') or the authentication server (10).

5. A method according to any claims 1 to 4,
**characterized in that** tunneling is used for communications between the authentication server (10) and a network apparatus requesting the authentication.

6. A method according to any claims 1 to 5,
**characterized in that** a key received from the authentication server (10) is used when encrypting communications.

7. A method according to any claims 1 to 6,
**characterized in that** a request for receiving the authentication data or the user interface identification data from the authentication server (10) as a response to the data transmitted to the authentication server is sent by one of the following:
an application (9), (9') the user interface is currently communicating with, or
an access server providing an access for the user interface from one telecommunications network to another telecommunications network, or
the user interface.

8. A method according to any claims 1 to 7,
**characterized in that** the authentication server (10) provides a trusted party operation and management.

9. An arrangement for use in telecommunications networks,
**characterized in that** the arrangement
comprises
a user interface connected to a first telecommunications network (4), said user interface having an identification of its own,
an application (9), (9') accessible through a packet data network (8),
an access server enabling the user interface to access the packet data network (8) through the first telecommunications network (4), and
an authentication server, wherein the authentication server (10) comprises a record or a database in which the identification of the user interface and a corresponding authentication data are stored in a retrievable manner and such that they are bound together, wherein
the first telecommunications network (4) is a circuit switched telephone network,
and the user interface comprises a data processing device,
and the packet data network (8) is operationally connected to said first network,
and wherein the authentication server (10) is arranged to have a direct connection with the access server between said first network (4) and said packet data network (8).

10. An arrangement according to claim 9,
**characterized in that** the authentication server (10) contains a table having a field for the authentication data and a field for the identification data.

11. An arrangement according to claim 10,
**characterized in that** the field for the authentication data is in form of an electronic key or a signature.

12. An arrangement according to claim 10,
**characterized in that** the field for the identification data is in form of a telephone subscription number or a Subscriber Identification Module SIM or an International Mobile Equipment Identity IMEI or a smart card identity.

13. An arrangement according to any of claims 9 to 12,
**characterized in that** the application (9), (9') is a gateway to a local area network, such as to an office network.

14. An arrangement according to any of claims 9 to 13,
**characterized in that** the packet data network (8) is accessed through an Access Server (5) arranged to terminate a circuit switched call and to convert communications into packet data so as to enable communications in a packet data network (8).

15. An arrangement according to any of claims 9 to 14,
**characterized in that** the authentication server (10) is implemented in an access point between the first telecommunications network (4) and the packet data network (8).

16. An arrangement according to any of claims 9 to 15,
**characterized in that** at least a part of communications between the authentication server (10) and other parties of communications is encrypted and/or tunneled.

17. An arrangement according to any of claims 9 to 16,
**characterized in that** the authentication server (10) provides a trusted party operation and management.

18. An authentication server for use in telecommunications networks, **characterized in that** the authentication server (10) comprises a database or record for storing a user interface identification data for a user interface terminal connected to a telecommunication network and authentication data for a plurality of user interface terminals (1) such that the user interface identification is bound to an associated authentication data for said user interface terminal (1), wherein the server is implemented to have a direct connection with an access server of a circuit switched telephone network to which the user interface terminal is connected, the user interface terminal comprising a data processing device, and wherein a packet data network (8) is operationally connected to said circuit switched telephone network through said access server, and wherein an application (9), (9') is provided via said packet data network (8).

19. An authentication server according to claim 18,
**characterized in that** the authentication server (10) contains a table having a field for the authentication data in form of an electronic key or a signature and a field for the identification data in form of a telephone subscription number or a Subscriber Identification Module SIM or an International Mobile Equipment Identity IMEI or a smart card identity.

20. An authentication server according to claim 18 or 19,
**characterized in that** the authentication server (10) is implemented in an access point between the circuit switched telephone network and the packet data network (8).

21. An authentication server according to any of claims 18 to 20, **characterized in that** at least a part of communications between the authentication server (10) and other parties of communications is arranged to be encrypted and/or tunneled.

22. An authentication server according to any of claims 18 to 21, **characterized in that** the authentication server (10) provides a trusted party operation and management.

## Patentansprüche

1. Verfahren zum Authentifizieren von Kommunikationsvorgängen in Telekommunikationsnetzwerken,
**dadurch gekennzeichnet, dass**
das Verfahren umfasst:
Speichern von Authentifizierungsdaten, die von dem ersten Telekommunikationsnetzwerk (4) empfangen werden, in einem Authentifizierungsserver (10);
Speichern eines von dem ersten Telekommunikationsnetzwerk (4) empfangenen Benutzerschnittstellen-Identifizierungsdatenwertes in dem Authentifizierungsserver (10), derart, dass er an die zugehörigen Authentifizierungsdaten gebunden wird;
Übertragen eines von dem ersten Telekommunikationsnetzwerk (4) einer kommunizierenden Benutzerschnittstelle empfangenen Identifizierungsdatenwert an den Authentifizierungsserver (10), wobei die Benutzerschnittstelle mit einer Anwendung (9), (9') kommuniziert, die in einem Paketdatennetzwerk (8) implementiert ist, die Benutzerschnittstelle ein Datenverarbeitungsgerät umfasst und mit einem leitungsvermittelten Telekommunikationsnetzwerk mit einer Betriebsverbindung mit dem Paketdatennetzwerk (8) verbunden ist;
Empfangen des Identifizierungsdatenwerts in dem Authentifizierungsserver (10);
Abrufen solcher Authentifizierungsdaten aus den gespeicherten Authentifizierungsdaten, die an den empfangenen Identifizierungsdatenwert gebunden sind; und
Übertragen mindestens eines Teils der abgerufenen Authentifizierungsdaten von dem Authentifizierungsserver (10) als Antwort auf die empfangenen Identifizierungsdaten.

2. Verfahren zum Authentifizieren von Kommunikationsvorgängen in Telekommunikationsnetzwerken,
**dadurch gekennzeichnet, dass**
das Verfahren umfasst:
Speichern von Authentifizierungsdaten, die von dem ersten Telekommunikationsnetzwerk (4) empfangen werden, in einem Authentifizierungsserver (10);
Speichern eines von dem ersten Telekommunikationsnetzwerk (4) empfangenen Benutzerschnittstellen-Identifizierungsdatenwertes in dem Authentifizierungsserver (10), derart, dass er an die zugehörigen Authentifizierungsdaten gebunden wird;
Übertragen eines von dem ersten Telekommunikationsnetzwerk (4) für eine kommunizierende Benutzerschnittstelle empfangenen Authentifizierungsdatenwertes an den Authentifizierungsserver (10);
Empfangen des Authentifizierungsdatenwertes in dem Authentifizierungsserver (10), wobei die Benutzerschnittstelle mit einer Anwendung (9), (9') kommuniziert, die in einem Paketdatennetzwerk (8) implementiert ist, die Benutzerschnittstelle ein Datenverarbeitungsgerät umfasst und mit einem leitungsvermittelnden Telekommunikationsnetzwerk mit einer Betriebsverbindung mit dem Paketdatennetzwerk (8) verbunden ist;
Abrufen solcher Benutzerschnittstellen-Identifizierungsdaten aus den gespeicherten Benutzerschnittstellen-Identifizierungsdaten, die an die empfangenen Authentifizierungsdaten gebunden sind; und
Übertragen mindestens eines Teils der abgerufenen Benutzerschnittstellen-Identifizierungsdaten von dem Authentifizierungsserver (10) als Antwort auf die empfangenen Authentifizierungsdaten.

3. Verfahren nach einem der Ansprüche 1 oder 2,
**dadurch gekennzeichnet, dass**
der Authentifizierungsdatenwert aus einem elektronischen Schlüssel oder einer Signatur besteht und der Benutzerschnittstellen-Identifizierungsdatenwert entweder eine Telekommunikationsteilnehmernummer, ein Teilnehmeridentifizierungsmodul (SIM bzw. Subscriber Identification Module), eine Internationale Mobilgerätidentität (IMEI bzw. International Mobile Equipment Identity), eine Smart-Card-Identität oder eine Kombination von mindestens zwei der besagten Identifizierer ist.

4. Verfahren nach einem der Ansprüche 1 bis 3,
**dadurch gekennzeichnet, dass**
die Kommunikationsvorgänge zwischen dem Authentifizierungsserver (10) und einer eine Authentifizierung anfordernden Netzwerkvorrichtung verschlüsselt werden unter Verwendung öffentlicher Schlüssel oder privater Schlüssel einer Anwendung (9), (9') oder des Authentifizierungsservers (10).

5. Verfahren nach einem der Ansprüche 1 bis 4,
**dadurch gekennzeichnet, dass**
Tunneling für Kommunikationsvorgänge zwischen dem Authentifizierungsserver (10) und einer die Authentifizierung anfordernden Netzwerkvorrichtung verwendet wird.

6. Verfahren nach einem der Ansprüche 1 bis 5,
**dadurch gekennzeichnet, dass**
ein von dem Authentifizierungsserver (10) empfangener Schlüssel bei der Verschlüsselung von Kommunikationsvorgängen verwendet wird.

7. Verfahren nach einem der Ansprüche 1 bis 6,
**dadurch gekennzeichnet, dass**
eine Anforderung zum Empfangen der Authentifizierungsdaten oder der Benutzerschnittstellen-Identifizierungsdaten von dem Authentifizierungsserver (10) als Antwort auf die an den Authentifizierungsserver übertragenen Daten durch eines der folgenden Elemente gesendet wird:
eine Anwendung (9), (9'), mit der die Benutzerschnittstelle gegenwärtig kommuniziert oder
einen Zugriffsserver, der für die Benutzerschnittstelle einen Zugriff von einem Telekommunikationsnetzwerk auf ein anderes Telekommunikationsnetzwerk bereitstellt, oder die Benutzerschnittstelle.

8. Verfahren nach einem der Ansprüche 1 bis 7,
**dadurch gekennzeichnet, dass**
der Authentifizierungsserver (10) einen Trusted-Party- bzw. Vertrauensperson-Betrieb und eine Vertrauensperson-Verwaltung bereitstellt.

9. Anordnung zur Verwendung in Telekommunikationsnetzwerken,
**dadurch gekennzeichnet, dass**
die Anwendung umfasst
eine mit einem ersten Telekommunikationsnetzwerk (4) verbundene Benutzerschnittstelle, wobei die Benutzerschnittstelle eine eigene Identifizierung aufweist,
eine Anwendung (9), (9'), auf die durch ein Paketdatennetzwerk (8) zugegriffen werden kann,
einen Zugriffsserver, der der Benutzerschnittstelle erlaubt, auf das Paketdatennetzwerk (8) durch das erste Telekommunikationsnetzwerk (4) zuzugreifen, und
einen Authentifizierungsserver, wobei der Authentifizierungsserver (10) eine Aufzeichnung oder eine Datenbank umfasst, in welcher die Identifizierung der Benutzerschnittstelle und ein entsprechender Authentifizierungsdatenwert auf eine abrufbare Art und Weise gespeichert sind, so dass sie aneinander gebunden sind, wobei
das erste Telekommunikationsnetzwerk (4) ein leitungsvermitteltes Telekommunikationsnetzwerk ist
und die Benutzerschnittstelle ein Datenverarbeitungsgerät umfasst
und das Paketdatennetzwerk (8) betriebsgemäß mit dem ersten Netzwerk verbunden ist
und wobei der Authentifizierungsserver (10) so angeordnet ist, dass er eine direkte Verbindung mit dem Zugriffsserver zwischen dem ersten Netzwerk (4) und dem Paketdatennetzwerk (8) aufweist.

10. Anordnung nach Anspruch 9,
**dadurch gekennzeichnet, dass**
der Authentifizierungsserver (10) eine Tabelle mit einem Feld für die Authentifizierungsdaten und einem Feld für die Identifizierungsdaten enthält.

11. Anordnung nach Anspruch 10,
**dadurch gekennzeichnet, dass**
das Feld für die Authentifizierungsdaten in Form eines elektronischen Schlüssels oder einer Signatur vorliegt.

12. Anordnung nach Anspruch 10,
**dadurch gekennzeichnet, dass**
das Feld für die Identifizierungsdaten in Form einer Telefonteilnehmernummer oder eines Teilnehmeridentifizierungsmoduls SIM oder einer Internationalen Mobilgerätidentität IMEI oder einer Smart-Card-Identität ausgelegt ist.

13. Anordnung nach einem der Ansprüche 9 bis 12,
**dadurch gekennzeichnet, dass**
die Anwendung (9), (9') ein Gateway zu einem lokalen Netzwerk ist, wie z.B. einem Büronetzwerk.

14. Anordnung nach einem der Ansprüche 9 bis 13,
**dadurch gekennzeichnet, dass**
auf das Paketdatennetzwerk (8) durch einen Zugriffsserver (5) zugegriffen wird, der angeordnet ist zum Beenden eines leitungsvermittelten Anrufs und zum Umsetzen von Kommunikationsvorgängen in Paketdaten, um Kommunikationsvorgänge in einem Paketdatennetzwerk (8) zu ermöglichen.

15. Anordnung nach einem der Ansprüche 9 bis 14,
**dadurch gekennzeichnet, dass**
der Authentifizierungsserver (10) in einem Zugangspunkt zwischen dem ersten Telekommunikationsnetzwerk (4) und dem Paketdatennetzwerk (8) implementiert ist.

16. Anordnung nach einem der Ansprüche 9 bis 15,
**dadurch gekennzeichnet, dass**
mindestens ein Teil der Kommunikationsvorgänge zwischen dem Authentifizierungsserver (10) und anderen Kommunikationsparteien verschlüsselt und/oder getunnelt ist.

17. Anordnung nach einem der Ansprüche 9 bis 16,
**dadurch gekennzeichnet, dass**
der Authentifizierungsserver (10) einen Vertrauensperson-Betrieb und eine Vertrauensperson-Verwaltung bereitstellt.

18. Authentifizierungsserver zur Verwendung in Telekommunikationsnetzwerken,
**dadurch gekennzeichnet, dass**
der Authentifizierungsserver (10) eine Datenbank oder Aufzeichnung umfasst zum Speichern eines Benutzerschnittstellen-Identifizierungsdatenwertes für ein Benutzerschnittstellen-Endgerät, das mit einem Telekommunikationsnetzwerk verbunden ist, sowie Authentifizierungsdaten für eine Vielzahl von Benutzerschnittstellen-Endgeräten (1), so dass die Benutzerschnittstellenidentifizierung an einen zugehörigen Authentifizierungsdatenwert für das Benutzerschnittstellen-Endgerät (1) gebunden ist,
wobei der Server so implementiert ist, dass er eine direkte Verbindung mit einem Zugriffsserver eines leitungsvermittelten Telefonnetzwerks aufweist, mit welchem das Benutzerschnittstellen-Endgerät verbunden ist, wobei das Benutzerschnittstellen-Endgerät ein Datenverarbeitungsgerät umfasst, und wobei ein Paketdatennetzwerk (8) betrieblich mit dem leitungsvermittelten Telefonnetzwerk durch den Zugriffsserver verbunden ist, und wobei eine Anwendung (9), (9') über das Paketdatennetzwerk (8) bereitgestellt ist.

19. Authentifizierungsserver nach Anspruch 18,
**dadurch gekennzeichnet, dass**
der Authentifizierungsserver (10) eine Tabelle mit einem Feld für die Authentifizierungsdaten in Form eines elektronischen Schlüssels oder einer Signatur und einem Feld für die Identifizierungsdaten in Form einer Telefonteilnehmernummer oder eines Teilnehmeridentifizierungsmoduls SIM oder einer Internationalen Mobilgerätidentität IMEI oder einer Smart-Card-Identität enthält.

20. Authentifizierungsserver nach Anspruch 18 oder 19,
**dadurch gekennzeichnet, dass**
der Authentifizierungsserver (10) in einem Zugangspunkt zwischen dem leitungsvermittelten Telefonnetzwerk und dem Paketdatennetzwerk (8) implementiert ist.

21. Authentifizierungsserver nach einem der Ansprüche 18 bis 20,
**dadurch gekennzeichnet, dass**
mindestens ein Teil der Kommunikationsvorgänge zwischen dem Authentifizierungsserver (10) und anderen Kommunikationsparteien so angeordnet ist, dass sie verschlüsselt oder getunnelt werden.

22. Authentifizierungsserver nach einem der Ansprüche 18 bis 21,
**dadurch gekennzeichnet, dass**
der Authentifizierungsserver (10) einen Vertrauensperson-Betrieb und eine Vertrauensperson-Verwaltung bereitstellt.

## Revendications

1. Procédé d'authentification de communications dans des réseaux de télécommunication, **caractérisé en ce que** le procédé comprend :
le stockage dans un serveur d'authentification (10) d'une donnée d'authentification reçue du premier réseau de télécommunication (4);
le stockage dans le serveur d'authentification (10) d'une donnée d'identification d'interface d'utilisateur reçue du premier réseau de télécommunication (4), de façon qu'elle soit liée à la donnée d'authentification associée;
l'émission vers le serveur d'authentification (10) d'une donnée d'identification d'une interface d'utilisateur en communication, reçue du premier réseau de télécommunication (4), ladite interface d'utilisateur étant en communication avec une application (9), (9') mise en oeuvre dans un réseau de données en paquets (8), l'interface d'utilisateur comprenant un dispositif de traitement de données et étant connectée à un réseau de télécommunication à commutation de circuits ayant une connexion fonctionnelle avec le réseau de données en paquets (8);
la réception des données d'identification dans le serveur d'authentification (10);
l'extraction, parmi les données d'authentification stockées, de la donnée d'authentification qui est liée à la donnée d'identification reçue; et
l'émission à partir du serveur d'authentification (10) d'au moins une partie de la donnée d'authentification extraite, en réponse à la donnée d'identification reçue.

2. Procédé d'authentification de communications dans des réseaux de télécommunication, **caractérisé en ce que** le procédé comprend :
le stockage dans un serveur d'authentification (10) d'une donnée d'authentification reçue du premier réseau de télécommunication (4);
le stockage dans le serveur d'authentification (10) d'une donnée d'identification d'interface d'utilisateur reçue du premier réseau de télécommunication (4), de façon qu'elle soit liée à la donnée d'authentification associée;
l'émission vers le serveur d'authentification (10) d'une donnée d'authentification reçue du premier réseau de télécommunication (4) pour une interface d'utilisateur en communication;
la réception de la donnée d'authentification dans le serveur d'authentification (10), ladite interface d'utilisateur étant en communication avec une application (9), (9') mise en oeuvre dans un réseau de données en paquets (8), l'interface d'utilisateur comprenant un dispositif de traitement de données et étant connectée à un réseau de télécommunication à commutation de circuits ayant une connexion fonctionnelle avec le réseau de données en paquets (8);
l'extraction, parmi les données d'identification d'interface d'utilisateur stockées, de la donnée d'identification d'interface d'utilisateur qui est liée à la donnée d'authentification reçue; et
l'émission à partir du serveur d'authentification (10) d'au moins une partie de la donnée d'identification d'interface d'utilisateur extraite, en réponse à la donnée d'authentification reçue.

3. Procédé selon l'une quelconque des revendications 1 ou 2, **caractérisé en ce que** la donnée d'authentification consiste en une clé ou une signature électronique, et la donnée d'identification d'interface d'utilisateur est l'un d'un numéro d'abonnement de télécommunication, d'un module d'identification d'abonné SIM (Subscriber Identification Module), d'une identité d'équipement mobile internationale IMEI (International Mobile Equipment Identity) ou d'une identité de carte à puce, ou est une combinaison d'au moins deux de ces identificateurs.

4. Procédé selon l'une quelconque des revendications 1 à 3, **caractérisé en ce que** les communications entre le serveur d'authentification (10) et un appareil de réseau demandant une authentification sont chiffrées en utilisant des clés publiques ou des clés privées d'une application (9), (9') ou du serveur d'authentification (10).

5. Procédé selon l'une quelconque des revendications 1 à 4, **caractérisé en ce qu'**on utilise la transmission en tunnel pour des communications entre le serveur d'authentification (10) et un appareil de réseau demandant l'authentification.

6. Procédé selon l'une quelconque des revendications 1 à 5, **caractérisé en ce qu'**une clé reçue du serveur d'authentification (10) est utilisée au moment du chiffrement de communications.

7. Procédé selon l'une quelconque des revendications 1 à 6, **caractérisé en ce qu'**une demande pour recevoir la donnée d'authentification ou la donnée d'identification d'interface d'utilisateur à partir du serveur d'authentification (10), en réponse à la donnée émise vers le serveur d'authentification, est envoyée par l'un des suivants :
une application (9) (9') avec laquelle l'interface d'utilisateur est en cours de communication, ou
un serveur d'accès fournissant un accès pour l'interface d'utilisateur, à partir d'un réseau de télécommunication vers un autre réseau de télécommunication, ou
l'interface d'utilisateur.

8. Procédé selon l'une quelconque des revendications 1 à 7, **caractérisé en ce que** le serveur d'authentification (10) procure un fonctionnement et une gestion correspondant à un tiers de confiance.

9. Structure pour l'utilisation dans des réseaux de télécommunication, **caractérisée en ce que** la structure comprend
une interface d'utilisateur connectée à un premier réseau de télécommunication (4), cette interface d'utilisateur ayant une identification qui lui est propre,
une application (9), (9') accessible par l'intermédiaire d'un réseau de données en paquets (8),
un serveur d'accès permettant à l'interface d'utilisateur d'accéder au réseau de données en paquets (8) à travers le premier réseau de télécommunication (4), et
un serveur d'authentification, le serveur d'authentification (10) comprenant un enregistrement ou une base de données dans lequel l'identification de l'interface d'utilisateur et une donnée d'authentification correspondante sont stockées d'une manière récupérable, et de façon à être liées ensemble, dans laquelle
le premier réseau de télécommunication (4) est un réseau téléphonique à commutation de circuits,
et l'interface d'utilisateur comprend un dispositif de traitement de données, et
le réseau de données en paquets (8) est connecté fonctionnellement audit premier réseau,
et dans laquelle le serveur d'authentification (10) est agencé de façon à avoir une connexion directe avec le serveur d'accès entre le premier réseau (4) et le réseau de données en paquets (8).

10. Structure selon la revendication 9, **caractérisée en ce que** le serveur d'authentification (10) contient une table ayant un champ pour la donnée d'authentification et un champ pour la donnée d'identification.

11. Structure selon la revendication 10, **caractérisée en ce que** le champ pour la donnée d'authentification est sous la forme d'une clé électronique ou d'une signature.

12. Structure selon la revendication 10, **caractérisée en ce que** le champ pour la donnée d'identification est sous la forme d'un numéro d'abonnement téléphonique ou d'un module d'identification d'abonné SIM (Subscriber Identification Module) ou d'une identité d'équipement mobile internationale IMEI (International Mobile Equipment Identity) ou d'une identité de carte à puce.

13. Structure selon l'une quelconque des revendications 9 à 12, **caractérisée en ce que** l'application (9), (9') est une passerelle vers un réseau local, tel qu'un réseau d'entreprise.

14. Structure selon l'une quelconque des revendications 9 à 13, **caractérisée en ce que** l'accès au réseau de données en paquets (8) se fait à travers un Serveur d'Accès (5) agencé pour remplir la fonction de terminaison d'un appel à commutation de circuits, et pour convertir des communications en données en paquets, de façon à permettre des communications dans un réseau de données en paquets (8).

15. Structure selon l'une quelconque des revendications 9 à 14, **caractérisée en ce que** le serveur d'authentification (10) est incorporé dans un point d'accès entre le premier réseau de télécommunication (4) et le réseau de données en paquets (8).

16. Structure selon l'une quelconque des revendications 9 à 15, **caractérisée en ce qu'**au moins une partie de communications entre le serveur d'authentification (10) et d'autres participants de communications est chiffrée et/ou transmise en tunnel.

17. Structure selon l'une quelconque des revendications 9 à 16, **caractérisée en ce que** le serveur d'authentification (10) procure un fonctionnement et une gestion correspondant à un tiers de confiance.

18. Serveur d'authentification pour utilisation dans des réseaux de télécommunication, **caractérisé en ce que** le serveur d'authentification (10) comprend une base de données ou un enregistrement pour stocker une donnée d'identification d'interface d'utilisateur pour un terminal d'interface d'utilisateur connecté à un réseau de télécommunication, et une donnée d'authentification pour une multiplicité de terminaux d'interface d'utilisateur (1), de façon que l'identification d'interface d'utilisateur soit liée à la donnée d'authentification associée pour le terminal d'interface d'utilisateur (1), dans lequel le serveur est réalisé de façon à avoir une connexion directe avec un serveur d'accès d'un réseau téléphonique à commutation de circuits auquel le terminal d'interface d'utilisateur est connecté, le terminal d'interface d'utilisateur comprenant un dispositif de traitement de données, et dans lequel un réseau de données en paquets (8) est connecté fonctionnellement au réseau téléphonique à commutation de circuits à travers le serveur d'accès, et dans lequel une application (9), (9') est fournie par l'intermédiaire du réseau de données en paquets (8).

19. Serveur d'authentification selon la revendication 18, **caractérisé en ce que** le serveur d'authentification (10) contient une table ayant un champ pour la donnée d'authentification sous la forme d'une clé électronique ou d'une signature, et un champ pour la donnée d'identification sous la forme d'un numéro d'abonnement téléphonique ou d'un module d'identification d'abonné SIM (Subscriber Identification Module) ou d'une identité d'équipement mobile internationale IMEI (International Mobile Equipment Identity) ou d'une identité de carte à puce.

20. Serveur d'authentification selon la revendication 18 ou 19, **caractérisé en ce que** le serveur d'authentification (10) est réalisé dans un point d'accès entre le réseau téléphonique à commutation de circuits et le réseau de données en paquets (8).

21. Serveur d'authentification selon l'une quelconque des revendications 18 à 20, **caractérisé en ce qu'**au moins une partie de communications entre le serveur d'authentification (10) et d'autres participants de communications est agencée de façon à être chiffrée et/ou transmise en tunnel.

22. Serveur d'authentification selon l'une quelconque des revendications 18 à 21, **caractérisé en ce que** le serveur d'authentification (10) procure un fonctionnement et une gestion correspondant à un tiers de confiance.
